(19) Europäisches Patentamt
European Patent Office
Office européen des brevets

(11) **EP 4 056 266 A1**

(12) **EUROPEAN PATENT APPLICATION**

(43) Date of publication:
**14.09.2022   Bulletin 2022/37**

(51) International Patent Classification (IPC):
**B01J 21/06** (2006.01)     **B01D 53/94** (2006.01)
**B01J 23/22** (2006.01)

(21) Application number: **21161898.8**

(22) Date of filing: **10.03.2021**

(52) Cooperative Patent Classification (CPC):
**B01J 21/063; B01D 53/9418; B01J 23/22;**
B01D 2251/2067; B01D 2255/20707;
B01D 2255/20723; B01D 2255/9207

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **UMICORE AG & Co. KG**
**63457 Hanau-Wolfgang (DE)**

(72) Inventors:
• JANSSENS, Ton
  **2880 Bagsværd (DK)**

• **HOUGHTON, Jennifer**
  **2920 Charlottenlund (DK)**
• **VENNESTRØM, Peter**
  **2300 København S (DK)**
• **GANJKHANLOU, Yadolah**
  **3543 Utrecht (NL)**
• **NANNUZZI, Chiara**
  **40038 Tolè-Vergato (IT)**
• **BERLIER, Gloria**
  **10153 Torino (IT)**
• **AAGAARD, Michel**
  **2820 Gentofte (DK)**

(54) **CATALYSTS FOR THE SELECTIVE REDUCTION OF NOX BY AMMONIA COMPRISING BROOKITE TIO2 AS SUPPORT MATERIAL**

(57)    The present invention discloses catalyst compositions for the selective catalytic reduction of nitrogen oxides comprising at least one oxide of vanadium in an amount smaller than or equal to 3.6 wt.-%, calculated as $V_2O_5$, and at least one oxide of titanium, wherein the at least one oxide of titanium comprises at least 50 wt.-% of brookite, and wherein the amount of the at least one oxide of titanium, calculated as $TiO_2$, constitutes at least 70 wt.-% of the total weight of the catalyst compositions, and optionally at least one oxide of silicon, tungsten, molybdenum, antimony, niobium, zirconium and/or cerium, wherein the weight ratios of the oxides of vanadium, titanium and optionally tungsten, molybdenum, antimony, niobium, zirconium and/or cerium, calculated as $V_2O_5$, $TiO_2$, $WO_3$, $MoO_3$, $Sb_2O_5$, $Nb_2O_5$, $ZrO_2$ and $CeO_2$, respectively, are based on the total weight of the catalyst compositions and add up to 100 %. The invention furthermore discloses catalysed substrate monoliths comprising said catalyst composition. The catalyst compositions and the substrate monoliths comprising them can be used in a process for the removal of NOx from exhaust gas or waste gas.

Fig. 1

EP 4 056 266 A1

**Description**

The present invention relates to catalyst compositions which are capable to convert nitrogen oxides, in the presence of ammonia, to nitrogen and water. The catalyst compositions comprise a vanadium oxide as catalytically active metal oxide and titania in its brookite phase as an inert metal oxide support. The catalyst compositions according to the present invention can be applied to catalyst supports in order to form catalytic articles for the selective catalytic reduction of nitrogen oxides by ammonia. These catalytic articles can be used for the removal of $NO_x$ from flue gas.

**Problem to be solved by the invention**

A flue gas is a gas emission stream exiting to the atmosphere via a flue. A flue is a pipe or channel for conveying flue gas from its source of origin. Flue gases are, for instance, exhaust gases from mobile sources like cars, trucks and ships. Furthermore, they can be formed during chemical processes in stationary power plants, waste-to-energy plants, nitric acid plants, or in the production of cement or glass.
Flue gas often comprises nitrogen oxides ($NO_x$), which have to be removed because of its toxicity and environmental impact. A known method for removing nitrogen oxides from flue gas from an oxygen-containing atmosphere in the presence of ammonia is the selective catalytic reduction method (SCR process; Selective Catalytic Reduction). The SCR reaction further requires a suitable catalyst, the SCR catalyst. In this method, the nitrogen oxides to be removed from the exhaust gas are converted to nitrogen and water using ammonia. The ammonia, which is used as a reducing agent, can be produced in the exhaust system as a secondary emission or made available in the exhaust gas system and subsequent hydrolysis by injecting a precursor from which ammonia can be formed, such as urea, ammonium carbamate, or ammonium formate.
To perform the last-mentioned variant of the SCR method, a source for the provision of the reducing agent - an injection device for metering the reducing agent into the flue gas as required - and an SCR catalyst arranged in the flow path of the flue gas are needed.

The selective catalytic reduction (SCR) takes place in the presence of an SCR catalyst according to the reaction schemes below:

$$4 \text{ NO} + 4 \text{ NH}_3 + \text{O}_2 \rightarrow 4\text{N}_2 + 6\text{H}_2\text{O} \qquad (1)$$

$$\text{NO} + \text{NO}_2 + 2 \text{ NH}_3 \rightarrow 2 \text{ N}_2 + 3 \text{ H}_2\text{O} \qquad (2)$$

$$6 \text{ NO}_2 + 8 \text{ NH}_3 \rightarrow 7 \text{ N}_2 + 12 \text{ H}_2\text{O} \qquad (3)$$

$$2 \text{ NO}_2 + 4 \text{ NH}_3 + \text{O}_2 \rightarrow 3 \text{ N}_2 + 6 \text{ H}_2\text{O} \qquad (4)$$

The conversion of nitrogen oxides from exhaust gases, in the presence of ammonia, to nitrogen and water, is known as the $NH_3$-SCR reaction.
Reactions 1 and 2 are the predominant ones with one mole of ammonia consumed per each mole of $NO_x$ converted. Reactions 3 and 4 occur in gases where a large fraction of the $NO_x$ is present as $NO_2$. To allow the reactions to occur at temperatures of 150 to 550 °C, a catalyst is used. The most common SCR catalyst types are based on vanadium oxides as the active compounds on a titanium dioxide ($TiO_2$) carrier system, or on molecular sieves promoted with transition metals. In the latter case, it mostly deals with zeolites promoted with copper and/or iron.
Reaction 1 is known as the "standard SCR reaction", reaction 2 is the "fast SCR reaction", and reactions 3 and 4 are the "$NO_2$ SCR reaction".

Catalyst compositions comprising vanadium oxide supported on titanium dioxide are well known as catalysts for the selective catalytic reduction of $NO_x$ by ammonia, which form the basis for the current technology to reduce emissions of NOx in oxygen-rich flue gases. Mixed oxides, which are based in particular on titanium dioxide and/or oxides of vanadium such as vanadium pentoxide, and which can contain other oxides, such as those of silicon, molybdenum, manganese, tungsten, cerium, and others, are described in detail in the literature; see, for example, EP 0 345 695 A2, US 5,198,403 A, WO 2011/013006 A2, and US 2013/205743 A1.
However, the amount of vanadium in such catalysts shall be as low as possible, because vanadium oxides can sublime and then be released to the environment. As vanadium oxides are harmful, their emission is regulated, and it is therefore desirable to minimize the amount of vanadium in vanadium-based catalysts. A more effective use of vanadium allows for smaller systems, or lower concentration of vanadium in catalyst articles; either way the impact of vanadium-based catalysts on the environment is reduced.

The skilled person knows that titanium dioxide $TiO_2$ exists in various phases, for example as anatase, rutile, and brookite. The titanium dioxide used as a support material for the vanadium pentoxide usually is anatase, or it predominantly comprises of anatase. The use of rutile and/or brookite as the predominant phases is not very common for several reasons.

US 2017/056859 A1 provides a selective catalytic reduction (SCR) catalyst containing a carbon material loaded with vanadium and tungsten and a method of preparing the same. In order to reduce the vanadium consumption, graphene is used as a matrix due to its high specific surface area a high strength, which is about 200 times the strength of steel. The method of preparing the SCR catalyst includes a first process of mixing a vanadium ($V_2O_5$) and tungsten ($WO_3$)-supported catalyst with titanium dioxide ($TiO_2$); a second process of extruding the mixture into a desired shape using a vacuum extruder; and a third process of drying the extruded object and then sintering the same. The skilled person learns from US 2017/056859 A1 that $TiO_2$ has three types of crystalline structures such as brookite, anatase, and rutile, and that anatase is a semi-stable phase that transitions into the stable rutile phase when thermal energy is applied from an external source. However, since a process takes place on a surface during an SCR reaction, the anatase phase exhibiting a larger specific surface area is more appropriate. Therefore, the $TiO_2$ to be used is anatase.

EP 3 260 199 A1 provides a catalyst for the purification of exhaust gas which has sufficiently high oxidation activities on CO, HC, and the like at low temperatures and keeps the sufficiently high oxidation activities on CO, HC, and the like even when the catalyst is exposed to high temperatures or to exhaust gas containing a sulfur component. The catalyst for purification of exhaust gas comprises: a support comprising alumina, yttria, and titania; and a noble metal supported on the support, wherein based on a total amount of alumina, yttria, and titania in the support, the yttria content is 0.7 to 35% by mass, the titania content is 0.3 to 24% by mass, and the alumina content is 50 to 98% by mass, and a content ratio, that is yttrium:titanium, between the yttria and the titania in the support is within a range of 90:10 to 20:80 based on an atomic ratio of the metal elements. The support may optionally comprise additional oxides, for instance oxides or rare earth metals, or vanadium oxide. The titania ($TiO_2$) in the support is not particularly limited. It is possible to use at least one type of titania selected from the group consisting of anatase-type (tetragonal crystal), rutile-type (tetragonal crystal), and brookite-type (orthorhombic crystal) titania. From the viewpoint that fine particles are easily formed, anatasetype titania is preferably used.

DE 10 2009 028 775 A1 discloses a catalytic converter for the removal of nitrogen oxides, said converter comprising a first catalytically active area and a second catalytically active area downstream of the first area. Both catalytically active areas comprise a second, bottom layer and a first, top layer. The first and the second layer of each catalytically active area catalyze the reduction of nitrogen oxides. Both areas are thermally coupled to one another. The SCR catalytically active compounds in the first and the second area and in the respective first and second layer can be selected from either oxides of vanadium, tungsten and titanium, or from transition metal-exchanged zeolites. In case the catalytically active compound deals with oxides of vanadium, tungsten and titanium, the titanium oxide is titanium dioxide is selected from rutile, anatase and/or brookite having a specific surface area of larger than or equal to 20 m$^2$/g. DE 10 2009 028 775 A1 is silent about possible different technical effects of the various $TiO_2$ phases, and it is also silent about preferred amounts of specific phases within a mixture of $TiO_2$ phases.

WO 2019/122898 A1 discloses an oxidation catalyst for treating an exhaust gas produced by a diesel engine comprising a catalytic region and a substrate, wherein the catalytic region comprises a catalytic material comprising: bismuth (Bi) or an oxide thereof; a platinum group metal (PGM) selected from the group consisting of (i) platinum (Pt), (ii) palladium (Pd) and (iii) platinum (Pt) and palladium (Pd); and a support material comprising a mixed oxide of titanium dioxide and silica; or a composite oxide of titanium dioxide and silica; or titanium dioxide doped with silica; wherein the platinum group metal (PGM) is supported on the support material; and wherein the bismuth (Bi) or an oxide thereof is supported on the support material. The support material comprises, or consists essentially of, a mixed oxide of titanium dioxide ($TiO_2$) and a refractory oxide; or a composite oxide of titanium dioxide and a refractory oxide; or titanium dioxide doped with a refractory oxide, wherein the refractory oxide is silica. The titanium dioxide (i.e. titanium (IV) oxide or titania) may be in the form of brookite, rutile or anatase. The oxidation catalyst can be used in an emissions control device include a diesel particulate filter (DPF), a lean NOxtrap (LNT), a lean NOx catalyst (LNC), a selective catalytic reduction (SCR) catalyst, a diesel oxidation catalyst (DOC), a catalysed soot filter (CSF), a selective catalytic reduction filter (SCRF™) catalyst, an ammonia slip catalyst (ASC) and combinations of two or more thereof. Selective catalytic reduction filters are filter coated with an SCR catalyst. The SCR catalyst or the SCRF™ catalyst may comprise a metal selected from the group consisting of at least one of Cu, Hf, La, Au, In, V, a lanthanide and a Group VIII transition metal (e.g. Fe), wherein the metal is supported on a refractory oxide or molecular sieve. The metal is preferably selected from Ce, Fe, Cu and combinations of any two or more thereof, more preferably the metal is Fe or Cu. The refractory oxide for the SCR catalyst or the SCRF™ catalyst may be selected from the group consisting of $Al_2O_3$, $TiO_2$, $CeO_2$, $SiO_2$, $ZrO_2$ and a mixed oxide of two or more thereof. The nonzeolite catalyst can also include tungsten oxide (e.g. $V_2O_5/WO_3/TiO_2$, $WO_x/CeZrO_2$, $WO_x/ZrO_2$ or $Fe/WO_x/ZrO_2$).

EP 2 939 983 A1 refers to a method for the oxidation of organic or inorganic substances in the presence of a heterogeneous titanium dioxide catalyst, an organic peroxide and an acid, wherein the $pK_a$ of the acid is 3 or lower. The $TiO_2$ is preferably doped with oxides or one or more transition metals, preferably with oxides of vanadium and/or tungsten. Although all three phases of $TiO_2$, i.e. anatase, rutile and brookite, as well as amorphous $TiO_2$, or mixtures thereof may be used for the purposes of the invention disclosed in EP 2 939 983 A1, preferably the $TiO_2$ is predominantly in the anatase or rutile form. By predominantly it is meant that at least about 40% of the $TiO_2$ particles are in a particular form. According to preferred embodiments, at least about 50%, 60%, 70%, 80% or 90% of the $TiO_2$ particles are in the anatase or rutile form. More preferably, over about 99% of the $TiO_2$ is in the anatase or rutile form. The $TiO_2$ catalysts according to EP 2 939 983 A1 can be doped with a dopant selected from metals from groups IVB, VB, VIB, VIIB, VIIIB and IVA of the periodic table, lanthanoids such as Lanthanum (La) and Cerium (Ce), metal oxides of hafnium (Hf),zirconium (Zr), cerium (Ce), titanium (Ti), vanadium (V), tungsten (W), molybdenum (Mo), manganese (Mn), iron (Fe), osmium (Os), rhodium (Rh), ruthenium (Ru), iridium (Ir), palladium (Pd), platinum (Pt), lead (Pb), tin (Sn) or silicon (Si), carbon (C), nonmetals such as phosphorus (P), nitrogen (N), selenium (Se), sulfur (S) or halides, homopolymers or copolymers of defined, block or random composition which comprise microcrystalline cellulose, polyolefins, polysaccharides, polyamides, polyurethanes, siloxanes, polythiophene, polynitrile, polyesters, graphite or graphene. However, it is not mentioned in what amounts these dopants shall be used. Furthermore, the description is silent about the use of the titanium dioxide catalysts in reduction reactions, for instance in NOx reduction reactions, and it teaches away from using brookite as the main $TiO_2$ phase.

US 2014/056793 A1 discloses catalyst support materials and catalyst compositions for the removal of nitrogen oxides from exhaust gases. The support materials comprise a mixture of $TiO_2$, $MoO_3$ and $SiO_2$. The $TiO_2$ can be selected from anatase, rutile and brookite. The support material is mixed with 0.3 to 3 wt.-% vanadium pentoxide $V_2O_5$ to form a vanadia catalyst. Optionally, the catalyst composition may additionally comprise phosphorus. The examples make use of anatase only, and is neither shown nor disclosed what technical effects occur when rutile or brookite are used instead, nor what amounts of the respective phases of $TiO_2$ are preferred if a mixture of them is used.

In J Yu, A Lundager Godiksen, A Mahakmel, F Søndergaard-Pedersen, T Rios-Carvajal, M Marks, N Lock, SB Rasmussen and B Brummerstedt Iversen: "Selective Catalytic Reduction of NO Using Phase-Pure Anatase, Rutile, and Brookite TiO2 Nanocrystals", Inorg Chem 2020, 59, 15324-15334, nanocrystals of the respective $TiO_2$ phases were used as supports for vanadia-titania catalysts, and their activities in the $NH_3$-SCR were measured. Vanadia-titania catalysts supported on anatase showed significantly higher NOx conversion rates than those supported on brookite and rutile, respectively.

In addition to nitrogen oxides ($NO_x$), flue gas usually contains carbon monoxide (CO). Furthermore, it often contains components which result from the incomplete combustion of the fuel in the combustion chamber in case the flue gas originates from a combustion process. Such combustion processes comprise, for instance, combustion processes in lean-burn combustion engines in particular of diesel engines, like, for instance, in passenger cars and light and heavy duty trucks and off-road vehicles, ships and trains. Furthermore, these production processes occur in stationary plants, for instance in stationary power plants, chemical production plants, gas turbines and diesel generators. Components resulting from the incomplete combustion of the fuel comprise residual hydrocarbons (HC), which are usually also predominantly present in gaseous form, and also particle emissions, often referred to as "diesel soot" or "soot particles." These are complex agglomerates from predominantly carbonaceous particulate matter and an adhering liquid phase, which usually preponderantly comprises longer-chained hydrocarbon condensates. The liquid phase adhering to the solid components is also referred to as "Soluble Organic Fraction SOF" or "Volatile Organic Fraction VOF."

In order to clean flue gases released from combustion processes or from chemical processes in stationary power plants, waste-to-energy plants, nitric acid plants, or in the production of cement or glass, the aforementioned components must be converted into harmless compounds as completely as possible. This is only possible with the use of suitable catalysts. Each catalyst converts specific harmful components into other components. Usually, several catalysts are used in series or in combination with one another in order to convert all harmful components.

Systems for the removal of harmful components of flue gas are well known in the art. In these systems, carbon monoxide (CO), gaseous hydrocarbons (HC) and, if applicable, organic agglomerates adhering to the soot particles (so-called "Volatile Organic Fraction" VOF) can be oxidatively removed using oxidation catalysts.

Particle filters are used to remove particle emissions. As a rule, particle filters are wall flow filter substrates, i.e., honeycomb bodies with two-way, gas-tight inflow and outlet channels, which are bounded and separated from each other by porous walls. The particle-containing exhaust gases which stream into the inflow channels are forced to pass through the porous wall by a gas-tight sealing plug located on the outlet side and escape again from the wall flow filter substrate through the outlet channels sealed on the inflow side. In doing so, diesel soot is filtered out of the exhaust gas. The use of nitrogen oxide storage catalysts offers an option for removing the nitrogen oxides. Their cleaning action is based on the fact that, in the lean operating phase of the engine, the nitrogen oxides from the storage material in the storage catalyst are predominantly stored in the form of nitrates and broken down again in a subsequent short rich operating phase of the engine, and the nitrogen oxides which are thereby released are converted with the reducing exhaust components in the storage catalyst to nitrogen, carbon dioxide, and water. This operating principle is described in, for example, the SAE document SAE 950809.

Vanadium oxide-based catalysts contain V2O5 as an essential component, which is harmful. Vanadium oxide-based SCR catalyst often additionally comprise oxides of tungsten, in particular $WO_3$, which are also harmful. Reports in the literature suggest that bulk $V_2O_5$ has a significant vapor pressure at temperatures relevant to active filter regeneration of the diesel particulate filter DPF, and both V and W compounds react with water to form species with increased vapor pressure. Measurable amounts of vanadium are first released at temperatures of well above 600 °C, which is around the highest applicable operation temperature of these systems. Consequently, there is a risk that V and W volatile compounds can vaporize from the $V_2O_5$/$WO_3$/$TiO_2$ SCR catalysts in particular when integrated in the DPF.

There is a constant need for novel, improved SCR catalysts comprising vanadium. It is thus an object of the present invention to provide catalyst compositions comprising vanadium which obtain the same intrinsic activity in the $NH_3$-SCR reaction as known vanadium-based SCR catalysts, but with a lower amount of vanadium. Another object of the present invention is to provide catalytic articles for the conversion of nitrogen oxides from exhaust gases, in the presence of ammonia, to nitrogen and water. These catalytic articles can thus be used in a process for the removal of $NO_x$ from exhaust gas or waste gas. Yet another object of the present invention is to provide systems for the purification of exhaust gas or waste gas streams from combustion processes.

## Solution of the problem

The object to provide catalyst compositions comprising vanadium which obtain the same intrinsic activity in $NH_3$-SCR reaction as known vanadium-based SCR catalysts, but with a lower amount of vanadium, is solved by catalyst compositions for the selective catalytic reduction of nitrogen oxides comprising

-　at least one oxide of vanadium in an amount of smaller than or equal to 3.6 wt.-%, calculated as $V_2O_5$,

and

-　at least one oxide of titanium, wherein the at least one oxide of titanium comprises at least 50 wt.-% of brookite, and wherein the amount of the at least one oxide of titanium, calculated as $TiO_2$, constitutes at least 70 wt.-% of the total weight of the catalyst compositions,

and optionally

-　at least one oxide of silicon in an amount of 0.01 to 18 wt.-%, calculated as $SiO_2$, and/or
-　at least one oxide of tungsten in an amount of 0.01 to 12.6 wt.-%, calculated as $WO_3$, and/or
-　at least one oxide of molybdenum in an amount of 0.01.0 to 7.5 wt.-%, calculated as $MoO_3$, and/or
-　at least one oxide of antimony in an amount of 0.01 to 4.0 wt.-%, calculated as $Sb_2O_5$, and/or
-　at least one oxide of niobium in an amount of 0.01 to 4.3 wt.-%, calculated as $Nb_2O_5$, and/or
-　at least one oxide of zirconium in an amount of 0.01 to 1.2 wt.-%, calculated as $ZrO_2$, and/or
-　at least one oxide of cerium in an amount of 0.01 to 1.1 wt.-%, calculated as $CeO_2$,

wherein
the weight ratios of the oxides of vanadium, titanium and optionally tungsten and/or molybdenum and/or antimony and/or niobium and/or zirconium and/or cerium, calculated as $V_2O_5$, $SiO_2$, $TiO_2$, $WO_3$, $MoO_3$, $Sb_2O_5$, $Nb_2O_5$, $ZrO_2$ and $CeO_2$, respectively, are based on the total weight of the catalyst compositions and add up to 100 %.

It has surprisingly been found that catalyst compositions for the selective catalytic reduction of nitrogen oxides comprising at least one oxide of vanadium in an amount of smaller than or equal to 3.6 wt.-% vanadium, calculated as $V_2O_5$, and optionally an oxide of silicon, tungsten, molybdenum, antimony, niobium, zirconium and/or cerium, supported on at least one oxide of titanium, wherein the at least one oxide of titanium comprises at least 50 wt.-% of brookite, the same intrinsic activity in $NH_3$-SCR reaction as known vanadium-based SCR catalysts with higher amounts of oxides of vanadium supported on other phases of titanium.

The catalyst compositions show the same intrinsic activity in $NH_3$-SCR reaction as known vanadium-based SCR catalysts with higher amounts of oxides of vanadium supported on other phases of titanium. The catalytic articles for the conversion of nitrogen oxides from exhaust gases, in the presence of ammonia, to nitrogen and water, as well as the systems for the purification of exhaust gas or waste gas streams from combustion processes are explained below, with the invention encompassing all the embodiments indicated below, both individually and in combination with one another.

A "catalyst composition" is a substance or a mixture of substances which is capable to convert one or more components of an exhaust gas or waste gas into one or more other components. An example of such a catalyst composition is, for instance, an oxidation catalyst composition which is capable of converting volatile organic compounds and carbon monoxide to carbon dioxide or ammonia to nitrogen oxides. Another example of such a catalyst is, for example, a selective reduction catalyst (SCR) composition which is capable of converting nitrogen oxides to nitrogen and water. In the context of the present invention, an SCR catalyst is a catalyst comprising a carrier substrate and a an SCR catalyst composition. The SCR catalyst composition according to the present invention comprises at least one catalytically active metal oxide and at least one support material. The at least one catalytically active metal oxide comprises at least one oxide of vanadium and optionally at least one oxide of at least one additional metal, as will be explained in more detail below. The at least one support material comprises at least one oxide of titanium, and wherein the at least one oxide of titanium comprises at least 50 wt.-% of brookite as defined above. Optionally, the support material may comprise additional oxides or mixtures of oxides, as, for example, silicon dioxide, aluminum oxide, tungsten trioxide or mixtures thereof.

A "carrier substrate", also called a "catalyst substrate" is a support to which the catalyst composition is affixed and shapes the final catalyst. The carrier substrate is thus a carrier for the catalytically active composition. Such carrier substrates are also known as "monoliths". Suitable substrates, are for instance, wall-flow filters, flow-through substrates and corrugated substrates.

Suspensions and dispersions are heterogeneous mixtures comprising solid particles and a solvent. The solid particles do not dissolve, but get suspended throughout the bulk of the solvent, left floating around freely in the medium. If the solid particles have an average particle diameter of less than or equal to 1 $\mu$m, the mixture is called a dispersion; if the average particle diameter is larger than 1 $\mu$m, the mixture is called a suspension. The term "mixture" as used in the context of the present invention is a material made up of two of more different substances which are physically combined and in which each ingredient retains its own chemical properties and makeup. Despite the fact that there are no chemical changes to its constituents, the physical properties of a mixture, such as its viscosity, surface tension, may differ from those of the components.

A "washcoat" is a suspension or dispersion of solid particles which can be applied to a catalyst substrate. This suspension or dispersion is often referred to as the "washcoat slurry". The slurry is applied to the carrier substrate and subsequently dried..

It is also possible to successively affix two or more washcoats to a carrier substrate. The skilled person knows that affixing two or more washcoats onto one single carrier substrate is possible by "layering" or by "zoning", and it is also possible to combine layering and zoning. In case of layering, the washcoats are affixed successively onto the carrier substrate, one after the other. The washcoat that is affixed first and thus in direct contact with the carrier substrate represents the "bottom layer", and the washcoat that is affixed last it the "top layer". In case of zoning, a first washcoat is affixed onto the carrier substrate from a first face side A of the carrier substrate towards the other face side B, but not over the entire length of the carrier substrate, but only to and endpoint which is between face sides A and B. Afterwards, a second washcoat is affixed onto the carrier, starting from face side B until an endpoint between face sides B and A. The endpoints of the first and the second washcoat need not be identical: if they are identical, then both washcoat zones are adjacent to one another. If, however, the endpoints of the two washcoat zones, which are both located between face sides A and B of the carrier substrate, are not identical, there can be a gap between the first and the second washcoat zone, or they can overlap. As mentioned above, layering and zoning can also be combined, if, for instance, one washcoat is applied over the entire length of the carrier substrate, and the other washcoat is only applied from one face side to an endpoint between both face sides.

Washcoats in the sense of the present invention comprise a solvent and solvent particles. Suitable solvents are water, polar organic solvents, and mixtures thereof. Solvent particles comprise the washcoat support particles and the catalytically active compositions. The catalytically active compositions can be present as separate particles, and/or the washcoat support particles can be impregnated with the catalytically active compositions. The washcoat support particles comprise at least one oxide of titanium, wherein the at least one oxide of titanium comprises at least 50 wt.-% of brookite as defined above. Catalytically active particles consist of the catalytically active component or a precursor of the catalytically active component. A precursor is a chemical compound, for instance a salt, comprising the metal of the intended catalytically oxide, which can be converted into the final catalytically active metal oxide, for instance by thermal treatment. Catalytically active particles in a washcoat can be unsupported or supported on at least one oxide of titanium, wherein the at least one oxide of titanium comprises at least 50 wt.-% brookite as defined above.

A washcoat can be applied in one or more steps onto the carrier substrate.

In one embodiment of the present invention, the washcoat slurry comprises a solvent and washcoat support particles. This washcoat is applied onto the substrate to form a coating. Subsequently, the at least one catalytically active oxide or a precursor thereof is applied onto the coating, for example by impregnation of the coating with a precursor of the at least one catalytically active oxide, followed by converting the precursor into the at least one catalytically active oxide. In another embodiment of the present invention, the washcoat slurry comprises a solvent, the washcoat support particles, and the at least one catalytically active metal oxide and/or precursors thereof. In case precursors of the at least one catalytically active metal oxide are used, they are subsequently converted into the catalytically active metal oxides as described above.

It is furthermore possible to apply more than one catalytically active metal oxide, wherein at least one of the catalytically active metal oxide or a precursor thereof forms part of the washcoat slurry, and at least one other catalytically active metal oxide is then applied onto the coating. In the context of the present invention, a "coating" is an SCR catalyst composition according to the present invention that has been affixed to the catalyst substrate and dried. The fixing of said SCR catalyst composition can be carried out according to the embodiments described above.

Optionally, it is also possible to mix the catalyst support material, the at least one oxide of titanium and the at least one catalytically metal oxide or precursors thereof and to extrude it. It is also possible to extrude only the catalyst support material and the at least one oxide of titanium and to apply the catalytically active metal oxides or precursors thereof afterwards. Furthermore, it is possible to extrude the catalyst support material, the at least one oxide of titanium and some of the at least one catalytically metal oxides or precursors thereof and to apply other catalytically active metal oxides or precursors thereof afterwards. Such extrusion methods are known to the skilled person and can be applied in the context of the present invention without departing from the scope of the claims.

A "catalytic article" or "brick" comprises of a catalyst substrate and a coating affixed thereto.

In the context of the present invention, the "SCR catalyst loading" is the concentration of the SCR catalyst composition, given in grams of the respective component, per liter of the catalyst substrate.

An "SCR catalytic article" is a catalytic article suitable for the removal of NOx from exhaust gas or waste gas.

A "system" for the purification of flue gas as used in the context of the present invention comprises of two or more catalytic articles in a row, wherein each individual catalytic article is designed to remove specific components of the exhaust gas or waste gas, for instance volatile organic compounds VOC, hydrocarbons HC and carbon monoxide in case of an oxidation catalyst, or nitrogen oxides in case of an SCR catalyst, or particulate matter in case of a particulate filter, or excess ammonia in case of an ammonia slip catalyst ASC. These catalytic articles are well-known.

"Upstream" and "downstream" are terms relative to the normal flow direction of the exhaust gas in the exhaust pipeline. The flow direction is from the source of the exhaust gas, i.e. from the source of combustion, e.g. an engine, a burner, to the exhaust into the atmosphere. Accordingly, this flow direction also defines the inlet end of each zone or catalytic article as the end where the exhaust gas enters each zone or catalytic article and the outlet end of each zone or catalytic article as the end where the exhaust gas leaves each zone or catalytic article. A "zone or catalytic article 1 which is located upstream of a zone or catalytic article 2" means that exhaust gas flow has passed through the zone or catalytic article 1 when it enters the zone or catalytic article 2.

The at least one oxide of vanadium is present in the catalyst composition according to the present invention in an amount smaller than or equal to 3.6 wt.-%, preferably 1.1 to smaller than or equal to 3.6 wt.-% and more preferably 2.2 to 3.2 wt.-%, calculated as $V_2O_5$ based on the total weight of the catalyst. In a preferred embodiment, the at least one oxide of vanadium is vanadium pentoxide $V_2O_5$.

The at least one oxide of titanium preferably is titanium dioxide $TiO_2$. The skilled person knows that titanium dioxide exists in several phases, for instance anatase, rutile, and brookite. In the present invention, the at least one oxide of titanium comprises at least 50 wt.-%, of brookite. In embodiments of the present invention, the at least one oxide of titanium comprises at least 60 wt.-%, at least 70 wt.-%, at least 80 wt.-%, or at least 90 wt.-% of brookite. Preferably, the at least one oxide of titanium comprises at least 90 wt.-%, more preferably 95 wt.-% and even more preferably 99 wt.-% The remainder of the oxides of titanium is represented by anatase, rutile, or a mixture of anatase and rutile, preferably by anatase.

In another embodiment of the present invention, the catalyst compositions comprise, in addition of the at least one oxide of vanadium and the at least one oxide of titanium, at least one oxide of silicon, tungsten, molybdenum, antimony, niobium, zirconium and/or cerium, and mixtures thereof.

In embodiments wherein the catalyst compositions comprise at least one oxide of silicon, said oxide is preferably silicon dioxide $SiO_2$, and it is present within the catalyst compositions in an amount of 0.01 to 18 wt.-%, preferably 8 to 18 wt.-%, more preferably 10 to 15 wt.-%, calculated as $SiO_2$ and based on the total weight of the catalyst compositions.

In embodiments wherein the catalyst compositions comprise at least one oxide of tungsten, said oxide is present within the catalyst compositions in an amount of 0.01 to 12.6 wt.-%, preferably 0.5 to 12.6 wt.-%, more preferably 3.7 to 5.0 wt.-%, most preferably 4.1 to 4.7 wt.-%, calculated as $WO_3$ and based on the total weight of the catalyst compositions.

In embodiments wherein the catalyst compositions comprise at least one oxide of molybdenum, said oxide is present in an amount of 0.01 to 7.5 wt.-%, preferably 3.0 to 7.5 wt.-%, more preferably 4.5 to 6.0, even more preferably 4.9 to 5.6 wt.-%, calculated as $MoO_3$ and based on the total weight of the catalyst compositions.

In embodiments wherein the catalyst compositions comprise at least one oxide of antimony, it is present within the catalyst compositions in an amount of 0.01 to 4.0 wt.-%, preferably 0.26 to 4.0 wt.-%, more preferably 0.66 to 1.33 wt.-%, calculated as $Sb_2O_5$ and based on the total weight of the catalyst compositions.

In embodiments wherein the catalyst compositions comprise at least one oxide of niobium, it is present within the catalyst composition in an amount of 0.01 to 4.2 wt.-%, preferably 0.28 to 4.2 wt.-%, more preferably 0.71 to 1.43 wt.-%, calculated as $Nb_2O_5$ and based on the total weight of the catalyst compositions.

In embodiment wherein the catalyst compositions comprise at least one oxide of zirconium, it is present within the catalyst composition in an amount of 0.01 to 1.2 wt.-%, preferably 0.4 to 1.2 wt.-%, more preferably 0.5 to 0.8 wt.-%, calculated as $ZrO_2$ and based on the total weight of the catalyst compositions.

In embodiments wherein the catalyst compositions comprise at least one oxide of cerium, it is present within the catalyst composition in an amount of 0.01 to 1.1 wt.-%, preferably 0.35 to 1.1 wt.-%, more preferably 0.5 to 0.75 wt.-%, calculated as $CeO_2$ and based on the total weight of the catalyst compositions.

The at least one oxide of titanium, which preferably is titanium dioxide $TiO_2$ and comprises at least 50 wt.-% of brookite as described above may optionally be doped with an oxide of silicon, tungsten or mixtures thereof. In embodiments wherein such doped oxides of titanium are used, the total amount of the oxides of silicon and tungsten, respectively, are in the same ranges as described above. This means that a part of at least one oxide of silicon can be present as dopant of the oxide of titanium, whereas another part can be added separately to the SCR catalyst composition, but the total amount of the at least one oxide of silicon is 8 to 18 wt.-%, preferably 10 to 15 wt.-%, calculated as $SiO_2$ and based on the total weight of the catalyst compositions, as described above. The same applies for oxides of titanium that are doped with at least one oxide of tungsten: a part of the oxide of tungsten can be present as dopant of the oxide of titanium, whereas another part can be added separately to the SCR catalyst composition, but the total amount of the at least one oxide of tungsten is 0.4 - 10 wt.-%, preferably 3 to 4 wt.-%, more preferably 3,3 to 3,7 wt.-%, calculated as elemental tungsten and based on the total weight of the catalyst compositions.

The skilled person knows that vanadium, tungsten, molybdenum, antimony, niobium, zirconium and cerium each form several oxides, wherein the metals have different oxidation states.

Known oxides of vanadium are, for instance, $VO$, $V_2O_3$, $VO_2$ and $V_2O_5$.

Know oxides of tungsten are, for instance, , $WO_2$ and $WO_3$.

Known oxides of molybdenum are, for instance, $Mo_2O_3$, $MoO_2$ and $MoO_3$.

Known oxides of antimony are, for instance, $Sb_2O_3$, $Sb_2O_4$ and $Sb_2O_5$.

Known oxides of niobium are, for instance, $NbO$ and $Nb_2O_5$.

Known oxides of zirconium are, for instance, and $ZrO_2$.

Known oxides of cerium are, for instance, $Ce_2O_3$ and $CeO_2$.

The skilled person knows that oxides of these metals in various oxidation states can coexist side by side, and that some of the metals, in particular vanadium, form an extensive family of oxides. However, in the context of the present invention, the amounts of the oxides vanadium, tungsten, molybdenum, antimony, niobium, zirconium and cerium are calculated in the form of the oxides $V_2O_5$, $WO_3$, $MoO_3$, $Sb_2O_5$ $Nb_2O_5$, $ZrO_2$ and $CeO_2$, respectively. The skilled person knows how to determine the amounts of the corresponding metals vanadium, tungsten, molybdenum, antimony, niobium, zirconium and cerium in a catalyst composition and how to convert them into the equivalent amounts of $V_2O_5$, $WO_3$, $MoO_3$, $Sb_2O_5$ $Nb_2O_5$, $ZrO_2$ and $CeO_2$. For vanadium, 1 wt.-% of elemental vanadium is equivalent to 1.8 wt.-% of vanadium, calculated as $V_2O_5$.

In all embodiments of the present inventions, the amounts of the at least one oxides of vanadium, titanium, and optionally tungsten, molybdenum, antimony, niobium, zirconium and/or cerium add up to 100 wt.-%, wherein the oxides of the metals vanadium, optionally tungsten, molybdenum, antimony, niobium, zirconium and/or cerium are present in the ranges given above.

In one embodiment of the present invention, the SCR catalyst compositions consist of

- at least one oxide of vanadium in an amount of smaller than or equal to 3.6 wt.-%, preferably 1.1 to smaller than or equal to 3.6 wt.-% and more preferably 2.2 to 3.2 wt.-%, calculated as $V_2O_5$, based on the total weight of the catalyst compositions, and
- at least one oxide of titanium, wherein the at least one oxide of titanium comprises at least 50 wt.-%, preferably 90 wt.-%, even more preferably 95 wt.-% and most preferably 99 wt.-% of brookite,

wherein

- the sum of the amounts of the at least one oxide of vanadium, calculated as $V_2O_5$ and based on the total weight of the catalyst composition, and the at least one oxide of titanium, calculated as $TiO_2$, add up 100 wt.-% of the catalyst compositions.

In another embodiment of the present invention, the SCR catalyst compositions consist of

- at least one oxide of vanadium in an amount of smaller than or equal to 3.6 wt.-%, preferably 1.1 to smaller than or equal to 3.6 wt.-% and more preferably 2.2 to 3.2 wt.-%, calculated as $V_2O_5$ based on the total weight of the catalyst compositions, and
- at least one oxide of tungsten in an amount of 0.01 to 12.6 wt.-%, preferably 0.5 to 12.6 wt.-%, more preferably 3.7 to 5.0 wt.-% and most preferably 4.1 to 4.7 wt.-%, calculated as $WO_3$ and based on the total weight of the catalyst compositions, and
- at least one oxide of titanium, wherein the at least one oxide of titanium comprises at least 50 wt.-%, preferably 90 wt.-%, even more preferably 95 wt.-% and most preferably 99 wt.-% of brookite,

wherein

- the sum of the amounts of the at least one oxide of vanadium, calculated as $V_2O_5$ and of the at least one oxide of tungsten, calculated as WO3, wherein both amounts are based on the total weight of the catalyst composition, and the at least one oxide of titanium, calculated as $TiO_2$, add up 100 wt.-% of the catalyst compositions.

In this embodiment, the at least one oxide of tungsten may be present as a dopant of the at least one oxide of titanium, or added separately, or a part is be present as a dopant, and another part is added separately as described above. Irrespective of whether the at least one oxide of tungsten is present as a dopant and/o added separately, the total amount of all oxides of tungsten present in the catalyst compositions is within the ranges given above.

The catalyst compositions according to the present invention show an improved intrinsic activity compared to catalyst compositions comprising the same catalytically active metal oxides in the same amounts, but supported on a titanium oxide that comprises less than 50 wt.-% of brookite. The main component of such titanium oxides comprising less than 50 wt.-% of brookite can, for instance, be anatase or rutile.

Furthermore, it has been shown that the catalysts according to the present invention, wherein the at least one oxide of titanium comprises at least 50 wt.-% brookite, require a lower amount of oxides of vanadium compared to catalysts known in the art, which comprise titanium oxide in the anatase phase, to obtain the same NOx conversion. This makes the novel catalyst compositions less expensive and more environmentally friendly. Furthermore, the novel catalyst compositions show a good sulfur tolerance and a fast transient behavior.

An "intrinsic activity" as used in the present invention is a measure of the observed rate of the catalytic reaction per amount of catalytically active material, for instance per gram of active compound. In the present invention, the intrinsic activity is expressed a first order rate constant per gram of catalyst composition. In the case of the SCR reaction, the reactant gases are nitrogen oxides $NO_x$ and ammonia $NH_3$, and the product gases are nitrogen $N_2$ and water $H_2O$. The first-order rate constant of the $NO_x$ conversion at 250°C is used as a measure for the intrinsic activity.

The intrinsic activity of the catalyst compositions according to the present invention is expressed by the first-order rate constant of the $NO_x$ conversion, measured at 250°C. For the activity measurement, a sample of 20 mg powder of the respective catalyst composition (150-300 $\mu$m sieve fraction) is filled in a quartz U-tube microreactor with 4 mm inner diameter, and diluted with 130-150 mg SiC with 60. The feed gas consists of 500 ppm NO, 600 ppm $NH_3$, 5% $H_2O$, 10% $O_2$ and balance $N_2$, and a flow of 225 Nml/min is used. Prior to the activity measurement, the catalyst compositions are heated for 2 hours at 550 °C in 10% $H_2O$/10% $O_2$/$N_2$, to degreen the catalyst compositions. The $NO_x$ conversion is determined from the total amount of $NO_x$ (the sum of NO and $NO_2$ concentrations) in the reactor exit gas measured by infrared spectroscopy at each temperature after allowing the system to stabilize for 16 min. Each data point is an average of the measured concentrations during the following 4 minutes.

The first order rate constant is then calculated as

$$k = -\frac{F}{W} ln(1 - X) \qquad (5)$$

wherein

$k$:     first order rate constant in mol/g h
$F$:     total gas flow in mol/h
ln:     natural logarithm

$X$:     conversion of $NO_x$, given by $1 - \dfrac{NO_{x(out)}}{NO_{x(feed)}}$
$W$:     amount of the catalyst composition in g
$NO_{x(feed)}$:     concentration of the $NO_x$ in the feed gas, i.e. at the inlet end, in ppm
$NO_{x(out)}$:     concentration of the $NO_x$ at the outlet end, i.e. after having passed the catalyst composition, in ppm

The flow of feed gas of 225 Nml/min refers to the volumetric flow rate of said feed gas at standard conditions for temperature (273.15 K) and pressure (101.325 kPa) in normal milliliters per minute, Nml/min as defined in DIN1343.

The concentration of $NO_x$ in the feed gas and at the outlet end, respectively, refer to the respective concentrations at the inlet end, i.e. immediately before $NO_x$ enters the device containing the catalyst composition according to the present invention, and at the outlet end, i.e. immediately after having passed said device. Known methods for measurement of these $NO_x$ concentrations are chemiluminescence (CLD), infrared spectroscopy (FTIR) or mass spectrometry (MS), but any method capable of determination of gas compositions can be used. The $NH_3$ concentrations can be determined by the same or similar methods. The skilled persons knows these methods for measuring $NO_x$ and $NH_3$ concentrations and how to adjust the amount of $NH_3$ dosed into the device and can apply them in the context of the present invention without departing from the scope of the claims.

In an embodiment of the present invention, the at least one oxide of titanium has a BET specific surface area equal to or larger than 10 $m^2$/g, and less or equal to 120 $m^2$/g,, preferably, equal to or larger than 30 $m^2$/g and less or equal to 100 $m^2$/g.

The SCR catalyst compositions according to the present invention can be used in a process for the removal of NOx from automotive combustion exhaust gases. In this process, also known as SCR (selective catalytic reduction), these catalyst compositions are used as the catalytically active materials for the conversion of NOx. The conversion of NOx is particularly necessary during lean burn operation of internal combustion engines. Therefore, the use of the catalyst compositions according to the present invention as the catalytically active material for the conversion of NOx is applicable in both diesel and gasoline engines, in particular when a DeNOx activity under lean burn operation is needed.

The catalyst compositions according to the present invention can be used for the preparation of SCR catalytic articles for the removal of NOx from exhaust gas or waste gas. In said SCR catalytic articles, the catalyst compositions according to the present invention are used as the catalytically active material for the conversion of $NO_x$.

As mentioned above, the catalyst compositions according to the present invention can be used for the preparation of SCR catalytic articles.

SCR catalytic articles of the present invention are manufactured by applying a coating as outlined above.

In one embodiment, the washcoat comprises water, optionally a polar organic solvent,at least one oxide of titanium, wherein the at least one oxide of titanium comprises at least 50 wt.-% of brookite, at least one oxide of vanadium, and at least one oxide of silicon, tungsten, molybdenum, antimony, niobium, zirconium, cerium, and mixtures thereof. Preferably, these oxides are selected from $TiO_2$, wherein at least 50 wt.-% of the $TiO_2$ comprise of brookite, $V_2O_5$ and optionally at least one oxide selected from $SiO_2$, $WO_3$, $MoO_3$, $Sb_2O_5$, $Nb_2O_5$, $ZrO_2$, $CeO_2$ or mixtures of these oxides of silicon, tungsten, molybdenum, antimony, niobium, zirconium, and cerium, in the amounts given above. After the application of the washcoat, the carrier substrate is dried at temperatures from 20°C up to 200°C for 0.1 to 10 hours.
In another embodiment, the washcoat consists of water, optionally a polar organic solvent, and $TiO_2$, wherein at least 50 wt.-% of the $TiO_2$ comprise of brookite. After applying this washcoat to the carrier support and drying it, additional oxides are applied by impregnating or spraying an aqueous solution comprising precursors of these oxides onto the washcoat. Subsequently, the carrier substrate comprising the $TiO_2$ washcoat and the impregnated or sprayed precursors of the other oxides is calcined for 0.1 to 20 hours at a temperature of 450 to 650°C, preferably 1 to 8 hours at 540 to 560°C, in order to convert the oxide precursors into the corresponding oxides.
In another embodiment, the washcoat comprises water, optionally a polar organic solvent, and $TiO_2$, wherein at least 50 wt.-% of the $TiO_2$ comprise of brookite, and some, but not all of the oxides selected from oxides of vanadium, silicon, tungsten, molybdenum, antimony, niobium, zirconium, cerium, but not all of them. Each of these oxides other than $TiO_2$ can be present in the washcoat either in the form of their oxides, i.e. they can be selected from $V_2O_5$, $SiO_2$, $WO_3$, $MoO_3$, $Sb_2O_5$, $Nb_2O_5$, $ZrO_2$, $CeO_2$ and/or from precursor of the oxides of vanadium, silicon, tungsten, molybdenum, antimony, niobium, zirconium, and cerium. This means that, for example, the oxide of vanadium can be present in this washcoat in the form of $V_2O_5$, and the oxide of tungsten can be present in the form of a precursor, or vanadium and tungsten are present in the form of their respective oxides $V_2O_5$ and $WO_3$, or both vanadium and tungsten are present in the form of precursors. In case at least one precursor of at least one oxide is used in this embodiment, the carrier substrate is calcined after the application of the washcoat as described above. This example is not limited to oxides of vanadium and tungsten, but can be applied to all oxides described above.
In yet another embodiment, $TiO_2$ and at least some of the other oxides are applied to the carrier substrate in the form of washcoat as described in both embodiments above and optionally calcined. Subsequently, some other oxides are applied by impregnating or spraying precursors thereof, followed by calcining.
In all embodiments, the washcoat can be applied by dip-coating the carrier substrate into the washcoat, or by sucking or pressing the washcoat into the monolith under reduced or pressure or overpressure.
Methods to apply washcoats onto carrier substrates and to impregnate or spray precursor solutions as described above are well-known to the skilled person and can be applied in the context of the present invention without departing from the scope of the claims.

Preferred precursors of the oxides are water-soluble salts. In the context of the present invention, a salt is considered "water-soluble", if at least 1 gram of said salt is soluble in 1 L of water at room temperature.

Suitable precursor salts of vanadium are ammonium metavanadate and oxalates and tartrates of vanadium. A suitable precursor salt of tungsten is ammonium metatungstate.
Suitable precursor salts of antimony are antimony sulfate, antimony acetate, antimony tartrate, antimony glycolate and antimony acetylacetonate.

A suitable precursor salt of niobium is ammonium niobate(V) oxalate hydrate, $NH_4[NbO(C_2O_4)_2]$*$xH_2O$.

Suitable precursors of zirconium are zirconium(IV) chloride, zirconyl(IV) nitrate, zirconyl(IV) sulfate.

Suitable precursors of cerium are ammonium cerium(IV) sulfate $(NH_4)_4Ce(SO_4)_4$, cerium(III) chloride $CeCl_3$, cerium(III) nitrate $Ce(NO_3)_3$, cerium(III) sulfate $Ce_2(SO_4)_3$, cerium (IV) sulfate $Ce(SO_4)_2$, cerium(III) acetate $Ce(CH_3COO)_3$.

If an antimony precursor other than antimony tartrate is used, it is preferred to add tartaric acid to the aqueous solution of the antimony precursor. Preferably, tartaric acid and the antimony precursor are used in a molar ratio of the tartaric acid to antimony of 2:1 to 8:1.

Typically, the washcoat loading on a carrier substrate is in the range of between 100 and 450 g/l, preferably 350 to 420 g/L. The "washcoat loading" refers to the finished coating after drying and, if required, calcining This value can be determined as the overall density of the catalyst item, minus the density of the carrier substrate before applying the washcoat.

Hereinafter, the following abbreviations are used for catalytic articles used in exhaust purification systems:

| SCR | Catalyst for selective catalytic reduction |
|------|------|
| DOC | Diesel oxidation catalyst |
| DPF | Diesel particulate filter |
| SDPF | Diesel particulate filter (DPF) coated with an SCR catalyst |
| CDPF | Catalysed Diesel particulate filter = DPF coated with a DOC |
| LNT | Lean $NO_x$ trap |
| ASC | ammonia slip catalyst |
| PNA | Passive $NO_x$ adsorption catalyst |

These catalytic systems, i.e. the SCR, the DOC, the DPF, the SDPF, the CDPF, the LNT, the PNA and the ASC can, independently from one another, be composed of one or more monoliths having different dimensions and forms. In one embodiment of the present invention, a catalysed substrate monolith comprises an SCR catalytically active material for the conversion of $NO_x$ for use in treating automotive combustion exhaust gases, wherein said SCR catalytically active material for the conversion of $NO_x$ is a catalyst composition according to the present invention.

In one embodiment of the present invention, a catalysed substrate monolith comprises an SCR catalytically active material for the conversion of $NO_x$ for use in treating waste gas, in particular for the cleaning of waste gas released during the combustion of fossil fuels, for instance by stationary power plants, gas turbines used in power generation, waste-to-energy plants, or nitric acid plants, wherein said SCR catalytically active material for the conversion of $NO_x$ is a catalyst composition according to the present invention.

Exhaust emissions of vehicles driven by a predominantly lean combustion engine contain, in addition to particle emission, in particular the primary emissions carbon monoxide CO, hydrocarbons HC, and nitrogen oxides $NO_x$. Due to the relatively high oxygen content of up to 15 vol.%, carbon monoxide and hydrocarbons can be rendered harmless by oxidation fairly easy, but the reduction of the nitrogen oxides to nitrogen is much more difficult to achieve.

In some embodiments of the SCR catalytically active compositions according to the present invention, said SCR catalyst is present in the form of a coating on a carrier substrate, i.e. as a washcoat on a carrier substrate. Carrier substrates can be so-called flow-through substrates or wall-flow filters.

Both carrier substrates may consist of inert materials, such as silicon carbide, glass fiber, aluminum titanate, cordierite, metal or metal alloys. Such carrier substrates are well-known to the skilled person and available on the market.

In other embodiments, the carrier substrates may be catalytically active on their own, and they may comprise catalytically active material, e.g. catalyst compositions according to the present invention. In addition to the catalytically active material, these carrier substrates comprise a matrix component. All inert materials which are otherwise used for the manufacturing of catalyst substrates may be used as matrix components in this context. It deals, for instance, with silicates, oxides, nitrides or carbides, with magnesium aluminum silicates being particularly preferred.

In other embodiments of the SCR catalytic articles according to the present invention, the catalyst itself forms part of the carrier substrate, for example as part of a flow-through substrate or a wall-flow filter. Such carrier substrates additionally comprise the matrix components described above.

Carrier substrates comprising the SCR catalytically active compositions according to the present invention may be used as such in exhaust purification. Alternatively, they may be coated with catalytically active materials, for example with additional SCR catalyst compositions. Insofar as these materials shall exhibit an SCR catalytic activity, the SCR catalytically active compositions mentioned above are suitable materials.

In one embodiment, catalytically active carrier materials are manufactured by mixing 10 to 95 wt.-% of at least one inert matrix component and 5 to 90 wt.-% of a catalytically active material, followed by extruding the mixture according to well-known protocols. As already described above, inert materials that are usually used for the manufacture of catalyst substrates may be used as the matrix components in this embodiment. Suitable inert matrix materials are, for example, silicates, oxides, nitrides and carbides, with magnesium aluminum silicates being particularly preferred. Catalytically active carrier materials obtainable by such processes are known as "extruded catalysed substrate monoliths".

The application of the catalytically active catalyst onto either the inert carrier substrate or onto a carrier substrate which is catalytically active on its own as well as the application of a catalytically active coating onto a carrier substrate, said carrier substrate comprising a catalyst according to the present invention, can be carried out following manufacturing processes well known to the person skilled in the art, for instance by widely used dip coating, pump coating and suction coating, followed by subsequent thermal post-treatment (calcination).

The skilled person knows that in the case of wall-flow filters, their average pore sizes and the mean particle size of the catalysts according to the present invention may be adjusted to one another in a manner that the coating thus obtained is located onto the porous walls which form the channels of the wall-flow filter (on-wall coating). However, the average pore sizes and the mean particle sizes are preferably adjusted to one another in a manner that the catalyst according to the present invention is located within the porous walls which form the channels of the wall-flow filter. In this preferable embodiment, the inner surfaces of the pores are coated (in-wall coating). In this case, the mean particle size of the catalysts according to the present invention has to be sufficiently small to be able to penetrate the pores of the wall-flow filter.

In another embodiment, the catalysed substrate monolith is a corrugated catalysed substrate monolith. The substrate has a wall densitiy of at least 50g/l but not more than 300g/l and a porosity of at least 50%. The substrate monolith is a paper of high silica content glass or a paper of E-glass fibre. The paper has a layer of diatomaceous earth or a layer of titania, and the catalyst is an SCR catalyst composition according to the present invention. This corrugated substrate monolith has the advantage that the catalyst composition layer does not peel off from the monolithic substrate during start and stop of a combustion engine. The SCR catalytically active material is applied on a monolithic substrate, which has the form of plane or corrugated plates. The substrate is made from sheets of E-glass fibres or from sheets of a glass with high silicon content and with a layer of $TiO_2$ or diatomaceous earth. The high silicon content glass contains 94-95% by weight $SiO_2$, 4-5% by weight $Al_2O_3$ and some $Na_2O$, these fibres have a density of 2000-2200 g/L with a fibre diameter of 8-10 $\mu$m. An example is the commercially available SILEX staple fiber. The E-glass contains 52-56% by weight $SiO_2$, 12-16% by weight $Al_2O_3$, 5-10% by weight $B_2O_3$, 0-1.5 % by weight $TiO_2$, 0-5% by weight MgO, 16-25% by weight CaO, 0-2% by weight $K_2O/Na_2O$ and 0-0.8% by weight $Fe_2O_3$. The material of the substrate is chosen in a manner that the density of the substrate is at least 50g/L, but not higher than 300g/L material, and the porosity of the substrate wall is at least 50% by volume of the material. The porosity of the monolithic substrate is obtained by the pores, which have a depth between 50 $\mu$m and 200 $\mu$m and a diameter between 1 $\mu$m and 30 $\mu$m. The SCR catalytically active material is applied on the substrate as a layer with a thickness of 10-150 $\mu$m. The SCR catalytically active material is a catalyst composition according to the present invention. The catalyst can be applied by dipping the monolithic substrate into an washcoat slurry comprising brookite $TiO_2$, at least one oxide of vanadium and optionally additional oxides, a binder and an anti-foam agent. Alternatively, the washcoat can be applied by sucking it through the monolith under reduced pressure, or by pressing it in the monolith under increase pressure. The solvent of the washcoat slurry can be water, a polar organic solvent, or mixtures thereof. The size of the particles is not more than 50 $\mu$m. The binder is preferably a silica sol or an alumina binder, and the antifoam agent is a silicone antifoam agent. The coated substrate is dried and subsequently calcined at 400-650°C, preferably 540-560°C, most preferably at 550°C. A catalyst element comprises layers of corrugated plates, which are separated from each other by plane plates. Catalyst elements can be in the form of boxes or cylinders. Corrugated substrate monoliths and their manufacture are disclosed in WO 2010/066345 A1, and the teaching thereof can be applied to the present invention without departing from the scope of the claims.

The catalyst compositions and the catalytic articles comprising said catalyst compositions according to the present invention may advantageously be used for the exhaust purification of lean combustion engines, in particular for diesel engines. They convert nitrogen oxides comprised in the exhaust gas into the harmless compounds nitrogen and water.

Commonly known exhaust gas purification systems for diesel engines are often formed by arranging an oxidation catalyst (DOC) having an oxidative function for carbon monoxide and hydrocarbons and optionally nitrogen monoxide and aforementioned selective catalytic reduction type catalyst (SCR), in a flow path of exhaust gas, characterized in that a spraying means to supply an urea aqueous solution or an aqueous ammonia solution or gaseous ammonia is arranged downstream of the aforementioned oxidation catalyst and upstream of aforementioned selective catalytic reduction type catalyst. The skilled person knows that the DOC catalyst might also be replaced by a passive NOx adsorber catalyst (PNA) or $NO_x$ storage catalyst (NSC) which is able to store NOx from the exhaust gas at lower temperatures and to desorb the $NO_x$ thermally at higher temperatures (PNA) or reduce the NOx directly by means of a reductant like rich exhaust gas (Lambda < 1) or other reducing agents like fuel (NSC), respectively. The PNA or NSC catalysts preferably also contain catalytic functions for the oxidation of carbon monoxide and hydrocarbons as well as optionally the oxidation of nitrogen monoxide. Furthermore, a diesel particulate filter (DPF) for filtering out soot is often arranged in the system together with the DOC (or NSC) catalyst and the SCR catalyst. In these arrangements, combustible particle components are deposited on the DPF and combusted therein. Such arrangements are, for instance, disclosed in EP 1 992 409 A1. Widely used arrangements of such catalysts are, for example (from upstream to downstream):

(1) DOC + $(NH_3)$ + SCR

(2) DOC + DPF + $(NH_3)$ + SCR

(3) DOC + $(NH_3)$ + SCR + DPF

(4) DOC + $(NH_3)$ + SCR + DOC + DPF

(5) DOC + $(NH_3)$ + SDPF + $(NH_3$ opt.) + SCR

(6) DOC + CDPF + $(NH_3)$ + SCR

(7) $(NH_3)$ + SCR + DOC + CDPF $(NH_3$ opt.) + SCR

(8) $(NH_3)$ + SCR + DOC + SDPF + $(NH_3$ opt.) + SCR

(9) $(NH_3)$ + SCR + ASC

(10) DOC + $(NH_3)$ + SCR + SDPF + $(NH_3$ opt.) + SCR

(11) DOC + $(NH_3)$ + SDPF + SCR + $(NH_3$ opt.) + SCR

In the above examples (1) to (11), $(NH_3)$ represents a position where liquid ammonia, an urea aqueous solution, an aqueous ammonia solution, ammonium carbamate, ammonium formiate or another reducing agent reducing $NO_x$ via the SCR reaction selectively is supplied as a reducing agent by spraying. The supply of such urea or ammonia compounds in automotive exhaust gas purification systems is well known in the art. $(NH_3$ opt.) in examples 5, 7, 8, 10 and 11 means that said second source of urea or ammonia compounds is optional. The catalysts containing the SCR catalyst compositions according to the present invention are preferably positioned close to the engine or close to the DPF, since here the temperatures are highest in the system. Preferably the SCR catalyst compositions of the present invention are used on the SDPF or catalysts closely positioned to the filter like in system 10 and 11 where one SCR catalyst is located directly upstream or downstream the SDPF, respectively without additional $NH_3$ dosing in-between these two catalysts. Also the first SCR catalyst of systems 7 to 9 which is close coupled to the engine is a preferred embodiment of the present invention.

Hence, the present invention furthermore refers to a method for the purification of exhaust gases of lean combustion engines, characterized in that the exhaust gas is passed over a catalyst composition according to the present invention. Lean combustion engines are diesel engines, which are generally operated under oxygen rich combustion conditions, but also gasoline engines which are partly operated under lean (i.e. oxygen rich atmosphere with Lambda > 1) combustion conditions. Such gasoline engines are, for instance, lean GDI engines or gasoline engines which are using the lean operation only in certain operation points of the engine like cold start or during fuel cut events. In this case a PNA, SCR or ASC catalyst according to the present invention might be arranged in combination with aftertreatment components typically used to clean exhaust emissions from gasoline engines like three way catalysts (TWC) or gasoline particulate filters (GPF). In these cases, the above mentioned system lay outs 1-11 are modified by replacing the DOC catalyst by a TWC catalyst and the DPF or CDPF by a GPF. In all those systems the dosing of ammonia is optional since gasoline engines are able to produce ammonia in situ during operation over the TWC catalyst so that the injection of aqueous urea or ammonia or another ammonia precursor upstream of the SCR catalyst might not be needed. In case a PNA is used in those systems, the PNA will preferably be located as a first catalyst in the system close to the engine to have an early heat up. The PNA might also be located in an under-floor position to prevent thermal damage of the catalyst. In these positions the exhaust temperatures can be controlled in order to not exceed 900°C.

In a preferred embodiment of the exhaust or waste gas cleaning process according to the present invention, ammonia is used as the reducing agent. The ammonia required may, for instance, be formed within the exhaust purification system upstream to a particulate filter by means of an upstream nitrogen oxide storage catalyst ("lean $NO_x$ trap"-LNT). This method is known as "passive SCR".

Alternatively, ammonia may be supplied in an appropriate form, for instance in the form of liquid ammonia, urea, ammonium carbamate or ammonium formiate, and added to the exhaust gas stream as needed. A widespread method is to carry along an aqueous urea solution and to and to dose it into the catalyst according to the present invention via an upstream injector as required.

The present invention thus also refers to a system for the purification of exhaust gases emitted from lean combustion engines, characterized in that it comprises a catalyst composition according to the present invention, preferably in the form of a coating on a carrier substrate or as a component of a carrier substrate, and an injector for aqueous urea solutions, wherein the injector is located upstream of the catalyst of the present invention.

For example, it is known from SAE-2001-01-3625 that the SCR reaction with ammonia proceeds more rapidly if the nitrogen oxides are present in a 1:1 mixture of nitrogen monoxide and nitrogen dioxide, or if the ratios of both nitrogen oxides are close to 1:1. As the exhaust gas from lean combustion engines generally contains an excess of nitrogen monoxide over nitrogen dioxide, this SAE paper suggest to increase the amount of nitrogen dioxide by means of an oxidation catalyst. The exhaust gas purification process according to the present invention may not only be applied in the standard SCR reaction, i.e. in the absence of nitrogen oxide, but also in the rapid SCR reaction, i.e. when part of the nitrogen monoxide has been oxidized to nitrogen dioxide, thus ideally providing a 1:1 mixture of nitrogen monoxide and nitrogen dioxide.

The present invention therefore also relates to a system for the purification of exhaust gases from lean combustion engines, characterized in that it comprises an oxidation catalyst, an injector for aqueous urea solutions and an SCR catalytic article comprising a catalyst composition according to the present invention, preferably in the form of a coating on a carrier substrate or as a component of a carrier substrate.

In a preferred embodiment of the exhaust gas purification system according to the present invention, platinum supported on a carrier support material is used as an oxidation catalyst.

Any carrier material for platinum and/or palladium which is known to the skilled person as suitable material may be used without departing from the scope of the claims. Said materials show a BET surface area of 30 to 250 $m^2/g$, preferably 50 to 200 $m^2/g$ (measured according to DIN 66132). Preferred carrier substrate materials are alumina, silica, magnesium dioxide, titania, zirconia, ceria and mixtures and mixed oxides comprising at least two of these oxides. Particularly preferred materials are alumina and alumina/silica mixed oxides. If alumina is used, it is preferably stabilized, for instance with lanthanum oxide.

The exhaust gas purification system is arranged in an order wherein, in flow direction of the exhaust gas purification system, an oxidation catalyst is arranged first, followed by an injector for an aqueous urea solution, and finally a catalyst according to the present invention.

The skilled person knows that the exhaust gas purification system may comprise additional catalysts. A particulate filter may, for instance, be coupled with either the DOC, thus forming a CDPF, or with an SCR, thus forming an SDPF.

In one embodiment of the present invention, the exhaust gas purification system comprises a particulate filter coated with an SCR catalyst, wherein the SCR catalytically active material is a catalyst composition according to the present invention.

The catalyst compositions according to the present invention can be coated into the walls of the filter (wall flow substrate) or on the surface of the filter walls. Also a combination of in-wall-coating and on-wall-coating is possible. The wall flow filter can be coated over the whole length of the filter or only partly from the inlet or from the outlet with the SCR catalyst composition according to the present invention. Methods to apply a catalyst composition on such a filter are well known to the skilled person and can be applied in the context of the present invention without departing from the scope of the claims.

Furthermore, the exhaust gas purification system may comprise a PNA. The PNA is a $NO_x$ storage device that adsorbs $NO_x$ at low temperatures. Once the exhaust temperatures increases, the stored $NO_x$ is released and reduced to nitrogen over a downstream catalyst, i.e. an SCR catalyst using ammonia, usually in the form of an aqueous urea solution, or an active, barium-based NSC. An NSC is a $NO_x$ storage catalyst.

In some PNA type catalysts, a combination of precious metals and catalyst compositions comprising an oxide of vanadium supported on titanium dioxide, for instance a catalyst composition according to the present invention, is used for $NO_x$ trapping. The precious metal is a platinum group metal selected from ruthenium, rhodium, palladium, osmium, iridium, platinum and mixtures thereof. Preferably, the precious metal is chosen from palladium, platinum and mixtures thereof, more preferably, the precious metal is palladium. The total amount of the platinum group metal or the mixture is present in a concentration of 0.01 to 10 wt.-%, preferably 0.05 to 5 wt.-%, even more preferably 0.1 to 3 wt.-%, calculated as the respective platinum group metal and based on the total weight of the SCR catalyst composition. In a preferred embodiment, the platinum group metal is palladium, and it is present in a concentration of 0.5 to 5 wt.-%, calculated as Pd and based on the total weight of the catalyst composition according to the present invention. In such a PNAs, the $NO_x$ trapping efficiency is influenced by the nuclearity and the oxidation state of Pd. The dispersion and lower oxidation states of Pd facilitate $NO_x$ adsorption.

In one embodiment of the present invention, the exhaust purification system comprises a PNA catalyst, wherein the PNA catalytically active material comprises a catalyst composition according to the present invention and at least one precious metal selected from palladium, platinum, and mixtures thereof.

The platinum group metals may be introduced into the PNA via injection of a PGM salt solution into an aqueous washcoat slurry. The skilled person knows that suitable precious metal precursor salts are the nitrates, acetates, sulfates and amine type complexes of the respective precious metals. He can apply this knowledge without departing from the scope of the claims.

The exhaust gas purification system may furthermore comprise an ammonia oxidation catalyst (ASC). It is well known to the skilled person that an ASC is preferably located downstream of the SCR, because recognizable amounts of $NH_3$ leave the SCR due to the dynamic driving conditions. Therefore, the conversion of excess ammonia which leaves the SCR is mandatory, since ammonia is also an emission regulated gas. Oxidation of ammonia leads to the formation of NO as main product, which would consequently contribute negatively to the total conversion of $NO_x$ of the whole exhaust system. An ASC may thus be located downstream the SCR to mitigate the emission of additional NO. The ASC catalyst combines the key $NH_3$ oxidation function with an SCR function. Ammonia entering the ASC is partially oxidized to NO. The freshly oxidized NO and $NH_3$ inside the ASC, not yet oxidized, can consequently react to $N_2$ following the usual SCR reaction schemes. In doing so, the ASC is capable of eliminating the traces of ammonia by converting them in a parallel mechanism to $N_2$.

In one embodiment of the present invention, the exhaust purification system comprises an ASC catalyst, wherein the ASC catalytically active material comprises a catalyst composition according to the present invention and at least one platinum group metal selected from platinum, palladium and mixtures thereof.

Platinum group metals are used as oxidation catalysts in an ASC, and catalyst compositions according to the present invention may be used for the SCR function. The precious metal is a platinum group metal selected from ruthenium, rhodium, palladium, osmium, iridium, platinum and mixtures thereof. Preferably, the precious metal is chosen from palladium, platinum, rhodium and mixtures thereof, more preferably, the precious metal is platinum. In a preferred embodiment, the platinum group metal is added in the form of a precursor salt to a washcoat slurry and applied to the carrier monolith. The platinum group metal is present in a concentration of 0.01 to 10 wt.-%, preferably 0.05 to 5 wt.-%, even more preferably 0.1 to 3 wt.-%, calculated as the respective platinum group metal and based on the total weight of the washcoat loading. In a preferred embodiment, the platinum group metal is platinum, and it is present in a concentration of 0.1 to 1 wt.-%, calculated as Pt and based on the total weight of washcoat loading.

## Brief description of the Drawings

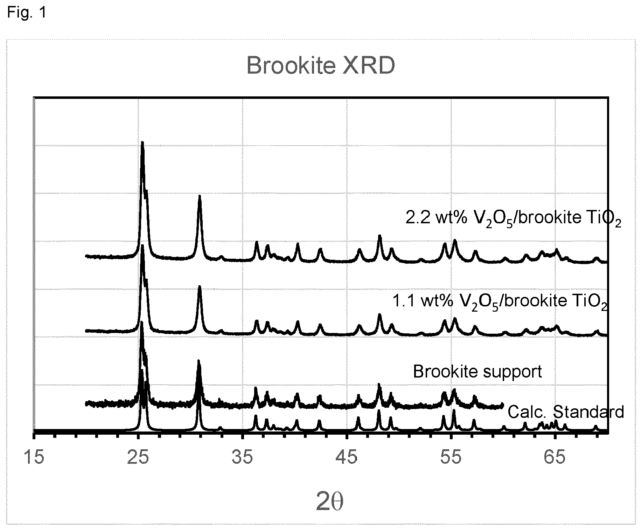

Fig. 1 shows X-ray diffraction patterns, also abbreviated as XRD patterns:

(a) 1.23 wt.-% elemental vanadium on brookite $TiO_2$, corresponding to 2.2 wt.-% $V_2O_5$

(b) 0.62 wt.-% elemental vanadium on brookite $TiO_2$, corresponding to 1.1 wt.-% $V_2O_5$

(c) Brookite $TiO_2$ support material

(d) Calculated standard XRD pattern for brookite $TiO_2$.

Calculated standard XRD pattern for brookite $TiO_2$.

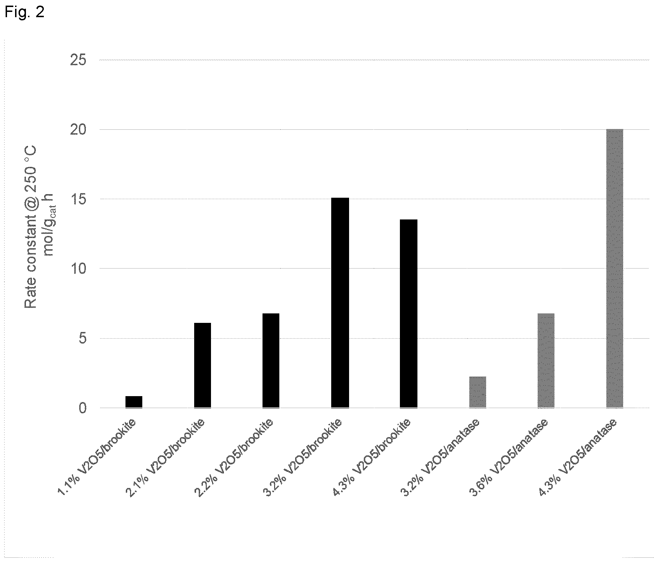

Fig. 2 shows the first order rate constant of various vanadium-$TiO_2$ catalyst compositions in the SCR reaction. The $TiO_2$ is either brookite or anatase. The first-order rate constant was determined at 250 °C. The feed gas consisted of 500 ppm NO, 600 ppm $NH_3$, 5% $H_2O$, 10% $O_2$ and balance $N_2$, and a flow of 225 Nml/min.

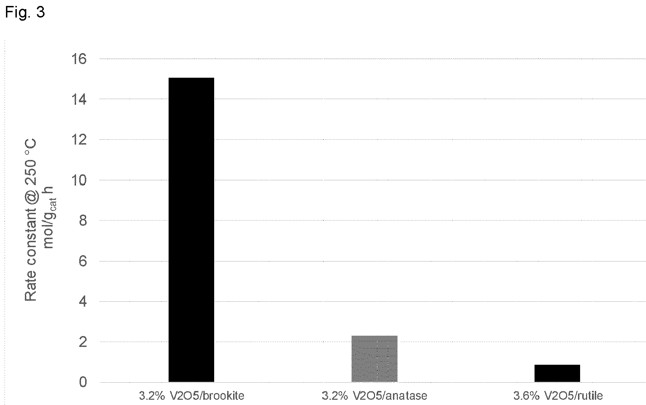

Fig. 3 shows the first-order rate constants, determined at 250°C, for catalyst compositions comprising for 3.2 wt% $V_2O_5$/brookite, 3.2 wt% $V_2O_5$/anatase and 3.6 wt% $V_2O_5$/rutile. The BET surface areas of the $TiO_2$ support materials used in this example are 37 $m^2$/g for the brookite, 89 $m^2$/g for the anatase, and 11 $m_2$/g for the rutile. The feed gas consisted of 500 ppm NO, 600 ppm $NH_3$, 5% $H_2O$, 10% $O_2$ and balance $N_2$, and a flow of 225 Nml/min.

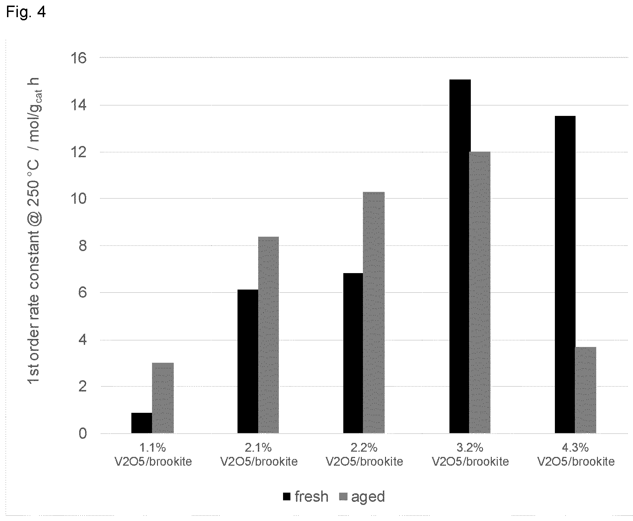

Fig. 4 shows the first-order rate constants, determined at 250°C of various vanadium-$TiO_2$ brookite catalyst compositions in the SCR reaction in the fresh state and after degreening and ageing. Aging was carried out at 550°C for 50 hours.

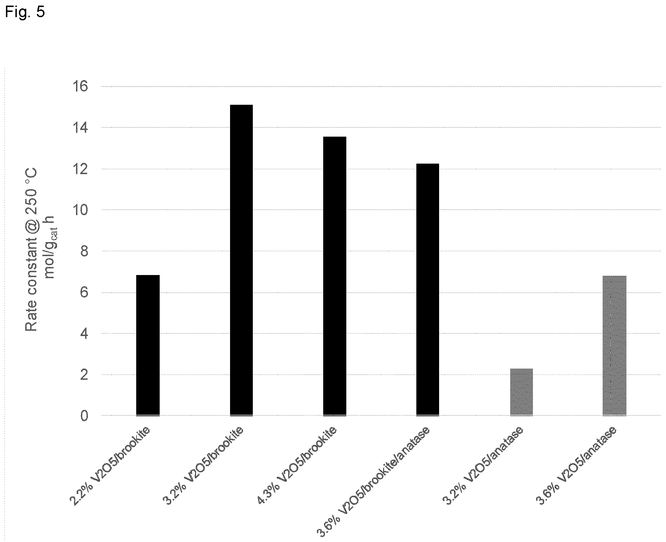

Fig. 5 shows the first-order rate constants of catalyst compositions containing V on a mixed brookite/anatase $TiO_2$ with a weight ratio of brookite:anatase of 57:43 compared to catalyst compositions containing V on pure brookite $TiO_2$ or on pure anatase $TiO_2$, respectively.

**Embodiments**

**Embodiment 1: First order rate constant of various vanadium-$TiO_2$ catalyst compositions in the SCR reaction**

Several V/$TiO_2$ catalyst compositions with either anatase or brookite $TiO_2$ were tested for their catalytic activity in the SCR reaction.
The following V/$TiO_2$ catalyst compositions were tested:

(a) 0.62 wt.-% V, corresponding to 1.1 wt.-% $V_2O_5$, remainder: brookite $TiO_2$

(b) 1.20 wt.-% V, corresponding to 2.1 wt.-% $V_2O_5$, remainder: brookite $TiO_2$

(c) 1.23 wt.-% V, corresponding to 2.2 wt.-% $V_2O_5$, remainder: brookite $TiO_2$

(d) 1.80 wt.-% V, corresponding to 3.2 wt.-% $V_2O_5$, remainder: brookite $TiO_2$

(e) 2.40 wt.-% V, corresponding to 4.3 wt.-% $V_2O_5$, remainder: brookite $TiO_2$

(f) 1.80 wt.-% V, corresponding to 3.2 wt.-% $V_2O_5$, remainder: anatase $TiO_2$

(g) 2.0 wt.-% V, corresponding to 3.6 wt.-% $V_2O_5$, remainder: anatase $TiO_2$

(h) 2.4 wt.-% V, corresponding to 4.3 wt.-% $V_2O_5$, remainder: anatase $TiO_2$

The first-order rate constant at 250 °C was used as a representative measure for the catalytic activity. For the activity measurement, a sample of 20 mg powder of the respective catalyst composition (150-300 $\mu$m sieve fraction) was filled in a quartz U-tube microreactor with 4 mm inner diameter, and diluted with ca. 140 mg SiC (mesh 60). The feed gas consisted of 500 ppm NO, 600 ppm $NH_3$, 5% $H_2O$, 10% $O_2$ and balance $N_2$, and a flow of 225 Nml/min was used. Prior to the activity measurement, the catalyst compositions were heated for 2 hours at 550 °C in 10% $H_2O$/10% $O_2$/$N_2$, to degreen the catalyst compositions. The $NO_x$ conversion was determined from the total amount of $NO_x$ (the sum of NO and $NO_2$ concentrations) in the reactor exit gas, measured by FTIR.
The first order rate constant was then calculated as

$$k = -\frac{F}{W} ln(1 - X),$$

wherein

k:        first order rate constant
F:        total gas flow in mol/h
ln:       natural logarithm

X:        conversion of NOx, given by $1 - \frac{NO_{x(out)}}{NO_{x(feed)}}$
W:       amount of the catalyst composition in g
$NO_{x(feed)}$:   concentration of the $NO_x$ in the feed gas, i.e. at the inlet end, in grams
$NO_{x(out)}$:   concentration of the NOx at the outlet end, i.e. after having passed the catalyst composition, in grams

The flow of feed gas of 225 Nml/min refers to the volumetric flow rate of said feed gas at standard conditions for temperature and pressure in Normal litre per minute, Nml/min, as defined in DIN1343.
The data clearly show the enhanced activity of $V_2O_5$/brookite $TiO_2$ catalysts with a vanadium content below 3.6 wt% $V_2O_5$, compared to catalysts consisting of 3.6 wt% $V_2O_5$ /anatase $TiO_2$ or 3.2 wt% $V_2O_5$/anatase $TiO_2$.
The first order rate constants for the various vanadium-$TiO_2$ catalyst compositions are shown in Fig. 2.

**Embodiment 2: Effect of the crystal phase of $TiO_2$ on the catalytic activity**

First-order rate constants were evaluated for catalyst compositions containing 3.2 wt% $V_2O_5$/brookite, 3.2 wt% $V_2O_5$/anatase or 3.6 wt% $V_2O_5$/rutile. The BET surface areas of the $TiO_2$ support materials used in this example are 37 $m^2$/g for the brookite, 89 $m^2$/g for the anatase, and 11 $m^2$/g for the rutile.

The first-order rate constants at 250°C were determined as described in embodiment 1 above.

Figure 3 shows the rate constants (in mol/$g_{cat}$ h), evaluated according to the procedure given in Embodiment 1, for 3.2 wt% $V_2O_5$/brookite, 3.2 wt% $V_2O_5$/anatase and 3.6 wt% $V_2O_5$/rutile catalyst compositions.

The data in Figure 3 show that by using a brookite $TiO_2$ support material, a surprisingly high activity is obtained, compared to the catalysts based on anatase or rutile $TiO_2$ support materials, in spite of the significantly lower BET surface area of brookite, compared to anatase. The BET surface area of the $TiO_2$ support materials is a factor that affects the catalytic activity, and a high surface area is usually preferred. This means that both the intrinsic activity per V and the intrinsic activity per $m^2$ of the BET surface area are significantly improved by using a brookite support. Table 1 shows the rate constants per $m^2$ $TiO_2$ and the rate constants per mol vanadium (on an elemental basis) as an illustration of this.

Table 1. Rate constants k at 250 °C, expressed per $m^2$ $TiO_2$ surface (mol/$m^2$ h) and per mol vanadium in the catalyst (mol/$mol_v$ h).

|  | k (250 °C) (mol/$m^2$ h) | k (250 °C) (mol/$mol_v$ h) |
| --- | --- | --- |
| 1.1% $V_2O_5$/brookite | 0.023 | 7042 |
| 2.1 % $V_2O_5$/brookite | 0.166 | 25997 |
| 2.2% $V_2O_5$/brookite | 0.184 | 28254 |
| 3.2% $V_2O_5$/brookite | 0.408 | 42670 |
| 4.3% $V_2O_5$/brookite | 0.366 | 28738 |
| 3.2% $V_2O_5$/anatase | 0.033 | 6473 |
| 3.6% $V_2O_5$/anatase | 0.098 | 17258 |
| 4.3% $V_2O_5$/anatase | 0.291 | 42578 |

Fig. 3 shows that the crystal phase of the $TiO_2$ support is an important factor for the catalytic activity of $V_2O_5$/$TiO_2$ catalyst compositions, implying that the chemical specification as $TiO_2$ is not sufficient to describe the catalytic properties. Rutile-based catalysts are known not to result in efficient SCR catalysts.

**Embodiment 3: First-order rate constant of V/$TiO_2$ catalyst compositions after aging**

Examples a) to e) of embodiment 1 were degreened at for 2h at 550°C and subsequently aged for an additional 50 h in the presence of 10% $H_2O$ and 10% $O_2$.

Afterwards the first-order rate constants at 250°C were determined as described in embodiment 1 above.

The first-order rate constants for examples a) to e) in the fresh state and after aging are shown in Fig. 4.

The results show that the vanadium/brookite $TiO_2$ catalyst compositions are sufficiently robust for application as SCR catalysts in diesel exhausts. The activity of the catalyst compositions with a low V content actually increases upon 50 h heating at 550°C in the presence of 10% water; the catalyst with 4.3 wt% $V_2O_5$/brookite shows a strong deactivation upon the prolonged heat treatment.

**Embodiment 4: $V_2O_5$/$TiO_2$ catalyst compositions comprising mixed brookite and anatase phases**

A mixed anatase/brookite $TiO_2$ material was synthesized by hydrothermal treatment of water-soluble titanium complexes as described in K Tomita, M Kobayashi, V Petrykin, S. Yin, T Sato, M Yoshimura, M Kakihana, "Hydrothermal synthesis of TiO2 nano particles using novel water-soluble titanium complexes", J. Mat. Sci. 2008, 43, 2217-2221. XRD analysis of the product revealed that the $TiO_2$ consisted of a mixture of about 57% brookite and 43% anatase, and a BET surface area of 60 $m^2$/g.

Subsequently, a catalyst composition consisting of vanadium oxide and the mixed anatase/brookite material and catalyst compositions consisting of vanadium and pure brookite $TiO_2$ or pure anatase $TiO_2$, respectively, were synthesized.

(i) 2.2 wt.-% $V_2O_5$ on pure brookite $TiO_2$

(j) 3.2 wt.-% $V_2O_5$ on pure brookite $TiO_2$

(k) 4.3 wt.-% $V_2O_5$ on pure brookite $TiO_2$

(l) 3.6 wt.-% $V_2O_5$ on mixed anatase/brookite $TiO_2$

(m) 3.2 wt.-% $V_2O_5$ on pure anatase $TiO_2$

(n) 3.6 wt.-% $V_2O_5$ on pure anatase $TiO_2$

The first-order rate constants were determined as described under Embodiment 1 above.

**Table 2: First-order rate constant of catalyst compositions consisting of vanadium on a mixed anatase/brookite $TiO_2$ compared to vanadium on pure anatase $TiO_2$**

| Embodiment | Composition | k [mol/($g_{cat}$*h)] |
|---|---|---|
| i | 2.2 wt.-% $V_2O_5$ / brookite | 6.88 |
| j | 3.2 wt.-% $V_2O_5$ / brookite | 15.08 |
| k | 4.3 wt.-% $V_2O_5$ / brookite | 13.54 |
| l | 3.6 wt.-% $V_2O_5$ / brookite / anatase | 12.26 |
| m | 3.2 wt.-% $V_2O_5$ / anatase | 2.29 |
| n | 3.6 wt.-% $V_2O_5$ / anatase | 6.78 |

The first-order rate constants for Examples i) to n) are shown in Fig. 5. The results show that catalyst compositions containing a mixture of brookite and anatase $TiO_2$ in a mass ratio of brookite to anatase of 57:43 still show a significantly higher first-rate reaction constant than V on anatase $TiO_2$ with comparable vanadium content.

**Claims**

1.  Catalyst compositions for the selective catalytic reduction of nitrogen oxides comprising

    - at least one oxide of vanadium in an amount smaller than or equal to 3.6 wt.-%, calculated as $V_2O_5$,
    - and
    - at least one oxide of titanium, wherein the at least one oxide of titanium comprises at least 50 wt.-% of brookite, and wherein the amount of the at least one oxide of titanium, calculated as $TiO_2$, constitutes at least 70 wt.-% of the total weight of the catalyst compositions,

    and optionally

    - at least one oxide of silicon in an amount of 0.01 to 18 wt.-%, calculated as $SiO_2$, and/or
    - at least one oxide of tungsten in an amount of 0.01 to 12.6 wt.-%, calculated as $WO_3$, and/or
    - at least one oxide of molybdenum in an amount of 0.01.0 to 7.5 wt.-%, calculated as $MoO_3$, and/or
    - at least one oxide of antimony in an amount of 0.01 to 4.0 wt.-%, calculated as $Sb_2O_5$, and/or
    - at least one oxide of niobium in an amount of 0.01 to 4.3 wt.-%, calculated as $Nb_2O_5$, and/or
    - at least one oxide of zirconium in an amount of 0.01 to 1.2 wt.-%, calculated as $ZrO_2$, and/or
    - at least one oxide of cerium in an amount of 0.01 to 1.1 wt.-%, calculated as $CeO_2$,

    wherein
    the weight ratios of the oxides of vanadium, titanium and optionally tungsten and/or molybdenum and/or antimony and/or niobium and/or zirconium and/or cerium, calculated as $V_2O_5$, $TiO_2$, $WO_3$, $MoO_3$, $Sb_2O_5$, $Nb_2O_5$, $ZrO_2$ and $CeO_2$, respectively, are based on the total weight of the catalyst compositions and add up to 100 %.

2. Catalyst compositions according to claim 1, consisting of

- at least one oxide of vanadium in an amount of smaller than or equal to 3.6 wt.-%, calculated as $V_2O_5$ and based on the total weight of the catalyst compositions, and
- at least one oxide of titanium, wherein the at least one oxide of titanium comprises at least 50 wt.-% of brookite,

wherein

- the sum of the amounts of the at least one oxide of vanadium, calculated as $V_2O_5$ and based on the total weight of the catalyst composition, and the at least one oxide of titanium, calculated as $TiO_2$, add up 100 wt.-% of the catalyst compositions.

3. Catalyst compositions according to claim 1, consisting of

- at least one oxide of vanadium in an amount of smaller than or equal to 3.6 wt.-%, calculated as $V_2O_5$ and based on the total weight of the catalyst compositions, and
- at least one oxide of tungsten in an amount of 0.01 to 12.6 wt.-%,, calculated as $WO_3$ and based on the total weight of the catalyst compositions, and
- at least one oxide of titanium, wherein the at least one oxide of titanium comprises at least 50 wt.-%, preferably 90 wt.-%, even more preferably 95 wt.-% and most preferably 99 wt.-% of brookite,

wherein

- the sum of the amounts of the at least one oxide of vanadium, calculated as $V_2O_5$ and of the at least one oxide of tungsten, calculated as $WO_3$, wherein both amounts are based on the total weight of the catalyst composition, and the at least one oxide of titanium, calculated as $TiO_2$, add up 100 wt.-% of the catalyst compositions.

4. Catalyst compositions according to any one of claims 1 to 3, wherein the at least one oxide of titanium has a BET specific surface are of equal to or larger than 10 $m^2/g$, and less or equal to 120 $m^2/g$.

5. A process for the removal of NOx from exhaust gas or waste gas wherein a catalyst composition according to any one of claims 1 to 4 is used as the SCR catalytically active material for the conversion of $NO_x$.

6. A catalysed substrate monolith comprising an SCR catalytically active material for the conversion of $NO_x$ for use in treating automotive combustion exhaust gases, wherein said SCR catalytically active material for the conversion of $NO_x$ is a catalyst composition according to any one of claims 1 to 5.

7. A catalysed substrate monolith comprising an SCR catalytically active material for the conversion of $NO_x$ for use for the cleaning of waste gas released during the combustion of fossil fuels, wherein said SCR catalytically active material for the conversion of $NO_x$ is a catalyst composition according to any one of claims 1 to 5.

8. A catalysed substrate monolith according to claim 6 or 7, wherein the catalyst composition according to any one of claims 1 to 5 is present in the form of a washcoat on a carrier substrate.

9. A catalysed substrate monolith according to claim 6 or 7, wherein the carrier substrate is a flow-through substrate or a wall-flow filter.

10. A catalysed substrate monolith according to claim 6 or 7, wherein the catalysed substrate monolith is an extruded substrate monolith.

11. A catalysed substrate monolith according to claim 6, wherein the catalysed substrate monolith is a corrugated catalysed substrate monolith.

12. An exhaust gas purification system comprising a particulate filter coated with an SCR catalyst, wherein the SCR catalytically active material is a catalyst composition according to any one of claims 1 to 4.

13. An exhaust gas purification system comprising a PNA catalyst, wherein the PNA catalytically active material comprises a catalyst compositions according to any one of claims 1 to 4 and at least one platinum group metal selected from ruthenium, rhodium, palladium, osmium, iridium, platinum and mixtures thereof.

14. An exhaust gas purification system according to claim 12, wherein the platinum group metal is palladium, and the palladium is present in a concentration of 0,5 to 5 wt.-%, calculated as Pd and based on the total weight of the catalyst composition according to any one of claims 1 to 4.

15. An exhaust gas purification system comprising an ASC catalyst, wherein the ASC catalytically active material comprises a catalyst composition according to any one of claims 1 to 4 and at least one platinum group metal selected from ruthenium, rhodium, palladium, osmium, iridium, platinum and mixtures thereof.

16. An exhaust gas purification system according to claim 14, wherein the platinum group metal is platinum, and the platinum is added in the form of a precursor salt to a washcoat slurry and applied to the carrier monolith, and the platinum is present in a concentration of 0,1 to 1 wt.-%, calculated as Pt and based on the total weight of the washcoat loading.

Fig. 1

Brookite XRD

2.2 wt% $V_2O_5$/brookite $TiO_2$

1.1 wt% $V_2O_5$/brookite $TiO_2$

Brookite support

Calc. Standard

15   25   35   45   55   65

$2\theta$

Fig. 2

Fig. 3

Fig. 4

Fig. 5

Europäisches
Patentamt

European
Patent Office

Office européen
des brevets

# EUROPEAN SEARCH REPORT

Application Number

EP 21 16 1898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YU JINLONG ET AL: "Selective Catalytic Reduction of NO Using Phase-Pure Anatase, Rutile, and Brookite TiO 2 Nanocrystals", INORGANIC CHEMISTRY, vol. 59, no. 20, 19 October 2020 (2020-10-19), pages 15324-15334, XP055832130, Easton , US ISSN: 0020-1669, DOI: 10.1021/acs.inorgchem.0c02304 Retrieved from the Internet: URL:https://pubs.acs.org/doi/pdf/10.1021/acs.inorgchem.0c02304> * Experimental section; table 2 * | 1-16 | INV. B01J21/06 B01D53/94 B01J23/22 |
| X | DEO GOUTAM ET AL: "Physical and chemical characterization of surface vanadium oxide supported on titania: influence of the titania phase (anatase, rutile, brookite and B)", APPLIED CATALYSIS A: GENERAL, vol. 91, no. 1, 1 November 1992 (1992-11-01), pages 27-42, XP055832133, AMSTERDAM, NL ISSN: 0926-860X, DOI: 10.1016/0926-860X(92)85176-C Retrieved from the Internet: URL:https://www.sciencedirect.com/science/article/pii/0926860X9285176C/pdf?md5=e78607eb9cd371bf7cc3f75fa90ca744&pid=1-s2.0-0926860X9285176C-main.pdf> * Experimental * | 1-4 | |
| A | US 10 500 575 B2 (JOHNSON MATTHEY CATALYSTS GERMANY GMBH [DE]) 10 December 2019 (2019-12-10) * the whole document * | 1-16 | TECHNICAL FIELDS SEARCHED (IPC) B01J B01D |

The present search report has been drawn up for all claims

| Place of search | Date of completion of the search | Examiner |
|---|---|---|
| The Hague | 16 August 2021 | Schoofs, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 1898

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2021

| Patent document cited in search report | | Publication date | Patent family member(s) | Publication date |
|---|---|---|---|---|
| US 10500575 | B2 | 10-12-2019 | BR 112019019508 A2 | 28-04-2020 |
| | | | CN 110461469 A | 15-11-2019 |
| | | | DE 102018204688 A1 | 04-10-2018 |
| | | | EP 3600659 A1 | 05-02-2020 |
| | | | GB 2561084 A | 03-10-2018 |
| | | | RU 2019134774 A | 30-04-2021 |
| | | | US 2018280948 A1 | 04-10-2018 |
| | | | WO 2018178643 A1 | 04-10-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0345695 A2
- US 5198403 A
- WO 2011013006 A2
- US 2013205743 A1
- US 2017056859 A1
- EP 3260199 A1
- DE 102009028775 A1
- WO 2019122898 A1
- EP 2939983 A1
- US 2014056793 A1
- WO 2010066345 A1
- EP 1992409 A1

**Non-patent literature cited in the description**

- **J YU ; A LUNDAGER GODIKSEN ; A MAHAKMEL ; F SØNDERGAARD-PEDERSEN ; T RIOS-CARVAJAL ; M MARKS ; N LOCK ; SB RASMUSSEN ; B BRUMMERSTEDT IVERSEN.** Selective Catalytic Reduction of NO Using Phase-Pure Anatase, Rutile, and Brookite TiO2 Nanocrystals. *Inorg Chem,* 2020, vol. 59, 15324-15334

- **K TOMITA ; M KOBAYASHI ; V PETRYKIN ; S. YIN ; T SATO ; M YOSHIMURA ; M KAKIHANA.** Hydrothermal synthesis of TiO2 nano particles using novel water-soluble titanium complexes. *J. Mat. Sci.,* 2008, vol. 43, 2217-2221